# EUROPEAN PATENT APPLICATION

(11) **EP 4 512 550 A1**
(43) Date of publication of application: **26.02.2025**
(21) Application number: 24194796.9
(22) Date of filing: 15.08.2024
(51) Int. Cl.: B22F 10/36, B22F 10/28, B22F 10/366, B33Y 10/00, B33Y 50/02, B22F 5/00

(54) **BUILD DATA GENERATING DEVICE, THREE-DIMENSIONAL POWDER BED FUSION ADDITIVE MANUFACTURING SYSTEM, AND THREE-DIMENSIONAL POWDER BED FUSION ADDITIVE MANUFACTURING METHOD**

(30) Priority: 22.08.2023 JP 2023135004
(71) Applicant: Jeol Ltd., Akishima-shi, Tokyo 196-8558 (JP)
(72) Inventor: HISAKI, Taku, Tokyo 196-8558 (JP); SATO, Takashi, Tokyo 196-8558 (JP); KOIWA, Kozo, Tokyo 196-8558 (JP)
(74) Representative: Boult Wade Tennant LLP

(57) **Abstract**

Even when shape elements having opposing appropriate manufacturing conditions are mixed in one cross-sectional shape, the entire cross-sectional shape is manufactured under an appropriate manufacturing condition. A build data generating device (30) generating build data for controlling a three-dimensional powder bed fusion additive manufacturing apparatus (10) that manufactures an article (38) by melting a cross-sectional shape (51) of each layer by irradiation of a beam includes: a region segmentation unit (302) that performs processing for segmenting the cross-sectional shape (51) cut out from three-dimensional shape data of the article (38) into a fine region (52) and a coarse region (53); and a condition application unit (303) that applies different manufacturing conditions to the fine region (52) and the coarse region (53) segmented by the region segmentation unit (302) to generate the build data.

## Description

### BACKGROUND

### Technical Field

The present invention relates to a build data generating device, a three-dimensional powder bed fusion additive manufacturing (PBF-AM) system, and a three-dimensional PBF-AM method.

### Related Art

As one of additive manufacturing methods for manufacturing an article, a powder bed fusion method is known. The powder bed fusion method is a shaping method in which a surface (hereinafter, also referred to as a "manufactured surface") of a powder layer formed by spreading powder with a predetermined thickness is selectively irradiated with a beam to melt and solidify a portion having a cross-sectional shape of an article to be manufactured. In the powder bed fusion method, a build plate is sequentially lowered each time the powder of each layer is melted and solidified, and the powder layers are stacked one by one to manufacture an article (component or the like). A three-dimensional PBF-AM apparatus employing a powder bed fusion method is disclosed in, for example,

### Patent Literature 1.

The operation of the three-dimensional PBF-AM apparatus is controlled according to an operation sequence program (hereinafter, also referred to as "build data") prepared in advance based on three-dimensional shape data. The three-dimensional shape data is data for specifying a three-dimensional shape of an article generated by three-dimensional CAD (Computer-Aided Design) or the like. The build data is generated by a computer device (hereinafter, referred to as a "build data generating device") in which a program generally called CAM (Computer Aided Manufacturing) software is incorporated using three-dimensional shape data of an article to be manufactured. The CAM software is executable on any computer.

As the processing of the CAM software in the build data generating device, first, the cross-sectional shape of each layer is cut out at an interval of a thickness corresponding to one layer from the input three-dimensional shape data. Next, manufacturing conditions for melting the cross-sectional shape of each layer are determined. The build data is obtained by applying the manufacturing condition to the cross-sectional shape of each layer and outputting the result to an electronic file.

### Citation List

### Patent Literature

Patent Literature 1: JP 2019-7065 A

### SUMMARY

In the build data generating device of the related art, only one manufacturing condition can be applied to one cross-sectional shape. Therefore, in the build data generated by the build data generating device in the related art, there is a problem that the entire cross-sectional shape cannot be manufactured under an appropriate manufacturing condition when shape elements having opposing appropriate manufacturing conditions are mixed in one cross-sectional shape. Therefore, for example, when a manufacturing condition that is excellent in shape reproducibility but slow in manufacturing speed is applied to one cross-sectional shape, it may take more time than necessary for manufacturing. Furthermore, when a manufacturing condition that enables high-speed manufacturing but is poor in shape reproducibility is applied to one cross-sectional shape, the shape reproducibility may deteriorate at a part of the cross-sectional shape.

An object of the present invention is to provide a technique capable of manufacturing the entire cross-sectional shape under an appropriate manufacturing condition even when shape elements having opposing appropriate manufacturing conditions are mixed in one cross-sectional shape.

A build data generating device according to the present invention is a build data generating device generating build data for controlling a three-dimensional powder bed fusion additive manufacturing (PBF-AM) apparatus that manufactures an article by melting a cross-sectional shape of each layer by irradiation of a beam, the build data generating device including: a region segmentation unit that performs processing for segmenting a cross-sectional shape cut out from three-dimensional shape data of the article into a fine region and a coarse region; and a condition application unit that applies different manufacturing conditions to the fine region and the coarse region segmented by the region segmentation unit to generate build data.

A three-dimensional PBF-AM system according to the present invention is a three-dimensional PBF-AM system including a three-dimensional PBF-AM apparatus that manufactures an article by melting a cross-sectional shape of each layer by irradiation of a beam and a build data generating device that generates build data for controlling the three-dimensional PBF-AM apparatus, in which the build data generating device includes a region segmentation unit that performs processing for segmenting a cross-sectional shape cut out from three-dimensional shape data of the article into a fine region and a coarse region; and a condition application unit that applies different manufacturing conditions to the fine region and the coarse region segmented by the region segmentation unit to generate build data, and the three-dimensional PBF-AM apparatus manufactures an article according to the build data.

A three-dimensional PBF-AM method according to the present invention is a three-dimensional PBF-AM method for manufacturing an article by melting a cross-sectional shape of each layer by irradiation of a beam, the method including: segmenting a cross-sectional shape cut out from three-dimensional shape data of the article into a fine region and a coarse region; and applying different manufacturing conditions to the fine region and the coarse region, respectively, to manufacture the article.

According to the present invention, it is possible to manufacture the entire cross-sectional shape under an appropriate manufacturing condition even when shape elements having opposing appropriate manufacturing conditions are mixed in one cross-sectional shape.

### BRIEF DESCRIPTION OF DRAWINGS

FIG. 1 is a side view schematically illustrating a configuration of a three-dimensional PBF-AM apparatus according to an embodiment of the present invention;
FIG. 2 is a block diagram illustrating a configuration example of a control system of the three-dimensional PBF-AM apparatus according to an embodiment of the present invention;
FIG. 3 is a flowchart illustrating a procedure of a processing operation of the three-dimensional PBF-AM apparatus according to an embodiment of the present invention;
FIG. 4 is a diagram illustrating a configuration example of a three-dimensional PBF-AM system according to an embodiment of the present invention;
FIG. 5 is a block diagram illustrating a configuration example of a build data generating device according to an embodiment of the present invention;
FIG. 6 is a diagram illustrating a setting example of a beam scanning condition;
FIG. 7 is a diagram illustrating a setting example of a beam irradiation condition in the case of a charged particle beam;
FIG. 8 is a diagram illustrating a setting example of a beam irradiation condition in the case of a laser beam;
FIG. 9 is a flowchart illustrating an example of a processing procedure of the build data generating device;
FIG. 10 is a diagram illustrating an example of a cross-sectional shape to be subjected to region segmentation;
FIG. 11 is a diagram (part 1) illustrating fine region specifying processing;
FIG. 12 is a diagram (part 2) illustrating the fine region specifying processing;
FIG. 13 is a diagram (part 3) illustrating the fine region specifying processing;
FIG. 14 is a diagram (part 4) illustrating the fine region specifying processing;
FIG. 15 is a diagram (part 5) illustrating the fine region specifying processing;
FIG. 16 is a diagram (part 1) illustrating coarse region specifying processing;
FIG. 17 is a diagram (part 2) illustrating the coarse region specifying processing;
FIG. 18 is a diagram (part 3) illustrating the coarse region specifying processing;
FIG. 19 is a diagram (part 4) illustrating the coarse region specifying processing;
FIG. 20 is a diagram (part 1) illustrating a segmentation example of the cross-sectional shape;
FIG. 21 is a diagram illustrating an example of a scanning line generated by first combining processing;
FIG. 22 is a diagram illustrating an example of a scanning line generated by second combining processing;
FIG. 23 is a diagram illustrating a first example of generating a scanning line in the vicinity of a contour line of the cross-sectional shape;
FIG. 24 is a diagram illustrating a second example of generating a scanning line in the vicinity of the contour line of the cross-sectional shape; and
FIG. 25 is a diagram (part 2) illustrating a segmentation example of the cross-sectional shape.

### DETAILED DESCRIPTION

Hereinafter, embodiments of the present invention will be described in detail with reference to the drawings. In the present specification and the drawings, elements having substantially the same function or configuration are denoted by the same reference numerals, and redundant description is appropriately omitted. Further, the following description and drawings are examples for describing the present invention, and may be omitted and simplified for convenience of description. Each component may be singular or plural unless otherwise specified. In addition, the position, size, shape, range, and the like of each component illustrated in the drawings may not represent the actual position, size, shape, range, and the like in order to facilitate understanding of the invention. Therefore, the present invention is not necessarily limited to the position, size, shape, range, and the like disclosed in the drawings.

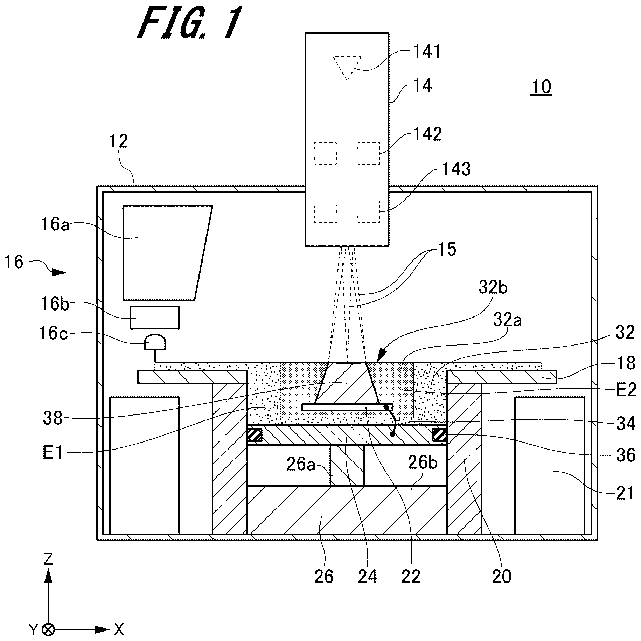

FIG. 1 is a side view schematically illustrating a configuration of a three-dimensional PBF-AM apparatus according to an embodiment of the present invention. In the following description, in order to clarify the shape, positional relationship, and the like of each part of the three-dimensional PBF-AM apparatus, the left-right direction in FIG. 1 is referred to as an X direction, the depth direction in FIG. 1 is referred to as a Y direction, and the vertical direction in FIG. 1 is referred to as a Z direction. The X direction, the Y direction, and the Z direction are directions orthogonal to each other. Further, the X direction and the Y direction are parallel to the horizontal direction, and the Z direction is parallel to the perpendicular direction.

As illustrated in FIG. 1, a three-dimensional PBF-AM apparatus 10 includes a vacuum chamber 12, a beam irradiation device 14, a powder application device 16, a build table 18, a build box 20, a collection box 21, a build plate 22, an inner base 24, and a plate moving device 26. The three-dimensional PBF-AM apparatus 10 manufactures an article (hereinafter, also referred to as a "manufactured object") by the above-described powder bed fusion method. In the present embodiment, a case where the beam with which the surface of a powder layer is irradiated is a charged particle beam, more specifically, an electron beam will be described as an example. However, the beam is not limited to the charged particle beam, and may be, for example, a laser beam. When a laser beam is employed, it is not necessary to vacuum the chamber.

The vacuum chamber 12 is a chamber for creating a vacuum state by evacuating the air in the chamber by a vacuum pump (not illustrated). The vacuum chamber 12 corresponds to a build chamber that forms a space for manufacturing a three-dimensional manufactured object 38. The build chamber forms a space for manufacturing a three-dimensional manufactured object.

The beam irradiation device 14 is a device that irradiates the surface of a powder layer 32a, that is, a manufactured surface 32b with an electron beam 15. The electron beam 15 is an example of the charged particle beam. The beam irradiation device 14 includes an electron gun 141 that is a generation source of the electron beam 15, a converging lens 142 that converges the electron beam 15 generated by the electron gun 141, and a deflection device 143 that deflects the electron beam 15.

The converging lens 142 is configured using a converging coil, and converges the electron beam 15 by a magnetic field generated by the converging coil. The size of the electron beam 15 in the manufactured surface 32b can be adjusted by the converging lens 142. The deflection device 143 is configured using a deflection coil, and deflects the electron beam 15 by a magnetic field generated by the deflection coil. The scanning of the electron beam 15 on the manufactured surface 32b is achieved by the deflection device 143.

The powder application device 16 is a device that applies a metal powder 32, which is a raw material of the manufactured object 38, onto the build plate 22 to form the powder layer 32a. The metal powder 32 is an example of a powder to be the raw material of the manufactured object 38. The powder application device 16 includes a hopper 16a, a powder dropping device 16b, and a squeegee 16c. The hopper 16a is a chamber for storing powder. The powder dropping device 16b is a device that drops the powder stored in the hopper 16a onto the build table 18. The squeegee 16c is an elongated member elongated in the Y direction. The squeegee 16c horizontally moves on the build plate 22 from one end side toward the other end side of the build table 18 to spread the metal powder 32. Thus, the powder layer 32a is formed on the build plate 22. The squeegee 16c is provided to be movable in the X direction in order to spread the metal powder 32 over the entire surface of the build table 18.

The build table 18 is horizontally arranged inside the vacuum chamber 12. The build table 18 is disposed below the powder application device 16. A central portion of the build table 18 is opened. The opening shape of the build table 18 is a circle in plan view or a square in plan view (for example, a quadrangle in plan view).

The build box 20 is a box that supports the inner base 24 so as to be movable in the vertical direction. The build box 20 forms a space for stacking the metal powder 32 applied by the powder application device 16 on the inner base 24. An upper end portion of the build box 20 is connected to an opening edge of the build table 18. A lower end portion of the build box 20 is connected to a bottom wall of the vacuum chamber 12.

The collection box 21 is a box that recovers the metal powder 32 supplied more than necessary among the metal powders 32 supplied onto the build table 18 by the powder application device 16. One collection box 21 is provided on each of one side and the other side in the X direction.

The build plate 22 is a plate for forming the manufactured object 38 using the metal powder 32. The manufactured object 38 is layered and formed on the build plate 22. The build plate 22 is formed in a circular shape in plan view or a square shape in plan view in accordance with the opening shape of the build table 18. The build plate 22 is connected (grounded) to the inner base 24 by a ground wire 34 so as not to be in an electrically floating state. The inner base 24 is held at a ground (GND) potential. The metal powder 32 is spread over the build plate 22 and the inner base 24.

The inner base 24 is provided to be movable in the vertical direction (Z direction). The build plate 22 moves in the vertical direction integrally with the inner base 24. The inner base 24 has a larger outer dimension than the build plate 22. The inner base 24 slides in the vertical direction along the inner surface of the build box 20. A seal member 36 is attached to an outer peripheral portion of the inner base 24. The seal member 36 is a member that maintains slidability and sealability between the outer peripheral portion of the inner base 24 and the inner surface of the build box 20. The seal member 36 is made of a material having heat resistance and elasticity.

The plate moving device 26 is a device that moves the build plate 22 and the inner base 24 in the vertical direction. The plate moving device 26 includes a shaft 26a and a drive mechanism unit 26b. The shaft 26a is connected to the lower surface of the inner base 24. The drive mechanism unit 26b includes a motor and a power transmission mechanism (not illustrated), and drives the power transmission mechanism using the motor as a drive source to move the build plate 22 and the inner base 24 integrally with the shaft 26a in the vertical direction. The power transmission mechanism includes, for example, a rack and pinion mechanism, a ball screw mechanism, and the like.

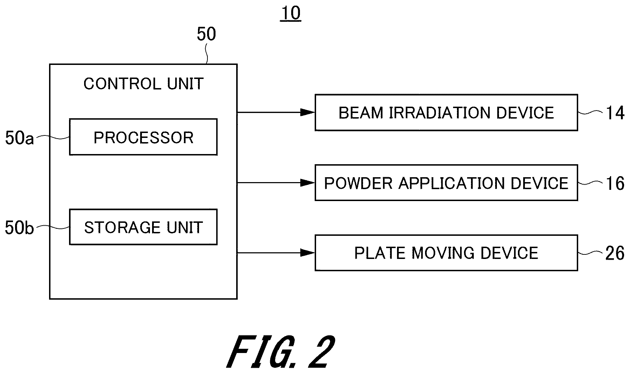

FIG. 2 is a block diagram illustrating a configuration example of a control system of the three-dimensional PBF-AM apparatus according to an embodiment of the present invention.

In FIG. 2, the control unit 50 is configured by a computer including a processor 50a such as a central processing unit (CPU) and a storage unit 50b such as a read only memory (ROM), a random access memory (RAM), a hard disk drive (HDD), and a solid state drive (SSD). Then, the control unit 50 comprehensively controls the operation of the three-dimensional PBF-AM apparatus 10 by the processor reading a program written in the ROM in advance into the RAM and executing the program. Furthermore, the control unit 50 controls the operation of the entire three-dimensional PBF-AM apparatus 10 according to build data to be described later. The beam irradiation device 14, the powder application device 16, and the plate moving device 26 are connected to the control unit 50 as control targets.

The beam irradiation device 14 emits the electron beam 15 based on a control command given from the control unit 50. When the electron beam 15 is emitted, the control unit 50 controls the electron beam 15 via the electron gun 141, the converging lens 142, and the deflection device 143. For example, the control unit 50 controls the beam current amount of the electron beam 15 via the beam irradiation device 14. In addition, the control unit 50 controls the spot size of the electron beam 15 via the converging lens 142. The spot size of the electron beam 15 is the size of the electron beam 15 on the manufactured surface 32b. In addition, the control unit 50 controls the deflection angle and the deflection speed of the electron beam 15 via the deflection device 143. The deflection angle of the electron beam 15 is a control parameter that determines the irradiation position of the electron beam 15. The deflection speed of the electron beam 15 is a control parameter that determines the scanning speed of the electron beam 15. The scanning speed of the electron beam 15 can be rephrased as a moving speed of the electron beam 15. The moving speed of the electron beam 15 can also be rephrased as a stay time (reciprocal of) while the electron beam 15 passes through the unit length section on the scanning path.

The plate moving device 26 moves the build plate 22 and the inner base 24 based on a control command given from the control unit 50. The powder application device 16 applies the metal powder 32 onto the build plate 22 based on a control command given from the control unit 50 to form the powder layer 32a. The operations of the hopper 16a, the powder dropping device 16b, and the squeegee 16c included in the powder application device 16 are controlled by the control unit 50.

### <Operation of Three-Dimensional PBF-AM Apparatus>

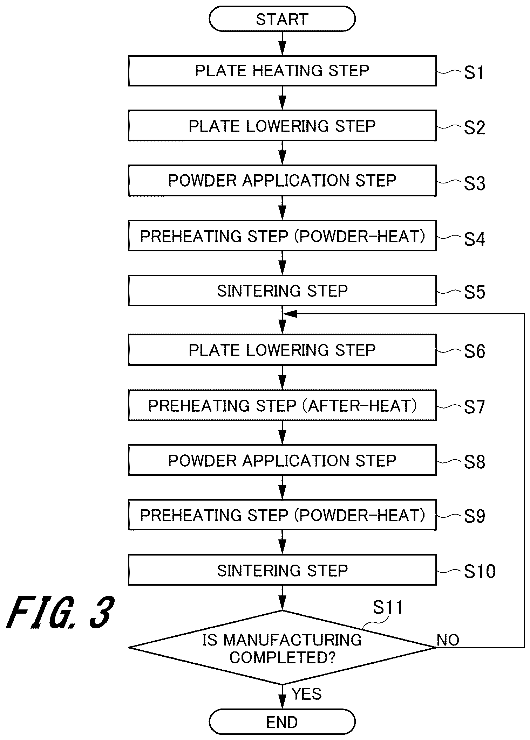

FIG. 3 is a flowchart illustrating a procedure of a processing operation of the three-dimensional PBF-AM apparatus according to an embodiment of the present invention. The processing operation illustrated in this flowchart is performed under the control of the control unit 50.

In the state before starting the manufacturing, the periphery of the build plate 22 is covered with the metal powder 32 except for the upper surface of the build plate 22. Furthermore, the upper surface of the build plate 22 is arranged at substantially the same height as the upper surface of the metal powder 32 laid on the build table 18.

### (Plate Heating Step)

First, the beam irradiation device 14 heats the build plate 22 by operating based on a control command given from the control unit 50 (step S1).

In step S1, the beam irradiation device 14 irradiates the build plate 22 with the electron beam 15. Thus, the build plate 22 is heated to a temperature at which the metal powder 32 is pre-sintered by heat transfer from the build plate 22 when the metal powder 32 is laid.

### (Plate Lowering Step)

Next, the plate moving device 26 lowers the build plate 22 by a predetermined amount by operating based on a control command given from the control unit 50 (step S2).

In step S2, the plate moving device 26 lowers the inner base 24 by a predetermined amount so that the upper surface of the build plate 22 is slightly lower than the upper surface of the metal powder 32 laid on the build table 18. At this time, the build plate 22 is lowered by the predetermined amount together with the inner base 24. The predetermined amount (hereinafter, also referred to as "ΔZ") corresponds to a thickness of one layer when the manufactured object 38 is manufactured by layering.

### (Powder Application Step)

Next, the powder application device 16 operates based on a control command given from the control unit 50 to apply the metal powder 32 onto the build plate 22 to form the powder layer 32a (step S3).

In step S3, the powder application device 16 drops the metal powder 32 supplied from the hopper 16a to the powder dropping device 16b onto the build table 18 by the powder dropping device 16b, and then moves the squeegee 16c in the X direction to spread the metal powder 32 on the build plate 22. At this time, the metal powder 32 is spread on the build plate 22 with a thickness corresponding to ΔZ. Thus, the powder layer 32a is formed on the build plate 22. Further, the excess metal powder 32 is collected in the collection box 21.

### (Preheating Step)

Next, the beam irradiation device 14 operates based on a control command given from the control unit 50 to preheat the powder layer 32a on the build plate 22 (step S4). In the preheating step S4, the powder layer 32a is preheated in order to pre-sinter the metal powder 32. The preheating step S4 is performed before a sintering step S5 described later. As described above, the preheating step performed before the sintering step is also referred to as a powder-heat step.

In FIG. 1, reference numeral E1 denotes an unsintered region where the unsintered metal powder 32 exists, and reference numeral E2 denotes a pre-sintered region where the pre-sintered metal powder 32 exists.

### (Sintering Step)

Next, the beam irradiation device 14 operates based on a control command given from the control unit 50 to sinter the metal powder 32 by melting and solidification (step S5).

In step S5, the metal powder 32 as a pre-sintered body is sintered by melting and solidifying the metal powder 32 pre-sintered as described above by irradiation with the electron beam 15. In step S5, the control unit 50 sets the cross-sectional shape of the layer cut out from the three-dimensional shape data of the target manufactured object 38 as a melting target region, and controls the beam irradiation device 14 according to the build data associated with the cross-sectional shape of the layer to be cut out. As a result, in the metal powder 32 on the build plate 22, a melting target region represented by a two-dimensional cross-sectional shape is melted by irradiation with the electron beam 15. The metal powder 32 melted by the irradiation with the electron beam 15 is solidified after the electron beam 15 passes. Thus, the manufactured object of the first layer is formed.

### (Plate Lowering Step)

Next, the plate moving device 26 lowers the build plate 22 by a predetermined amount (ΔZ) by operating based on a control command given from the control unit 50 (step S6) .

In step S6, the plate moving device 26 lowers the build plate 22 and the inner base 24 by ΔZ.

### (First Preheating Step)

Subsequently, the beam irradiation device 14 operates based on a control command given from the control unit 50 to preheat the powder layer 32a on the build plate 22 (step S7). In the first preheating step S7, as a preparation for spreading the metal powder 32 in the next layer, the powder layer 32a that has completed the sintering step in the previous layer is preheated. As a result, the powder layer 32a is heated to such an extent that the powder layer 32a is pre-sintered by heat transfer from the powder layer 32a when the metal powder 32 of the next layer is spread. The preheating step S7 may be performed after the sintering step S5 described above or may be performed after a sintering step S10 described later. As described above, the preheating step performed after the sintering step is also referred to as an after-heat step.

### (Powder Application Step)

Next, the powder application device 16 operates based on a control command given from the control unit 50 to apply the metal powder 32 onto the build plate 22 to form the powder layer 32a (step S8).

In step S8, the powder application device 16 operates similarly to step S3 described above. Thus, on the build plate 22, the second layer of metal powder 32 is spread over the sintered body formed of the first layer of metal powder 32 to form the powder layer 32a.

### (Second Preheating Step)

Next, the beam irradiation device 14 operates based on a control command given from the control unit 50 to preheat the metal powder 32 forming the second powder layer 32a (step S9). The preheating step S9 is performed before the sintering step S10 described later. Therefore, the preheating step S9 is also referred to as a powder-heat step.

In step S9, the beam irradiation device 14 operates similarly to step S4 described above.

As a result, the metal powder 32 forming the second powder layer 32a is pre-sintered.

### (Sintering Step)

Next, the beam irradiation device 14 operates based on a control command given from the control unit 50 to sinter the metal powder 32 forming the second powder layer 32a by melting and solidification (step S10).

In step S10, the beam irradiation device 14 operates similarly to step S5 described above. Thus, the manufactured object of the second layer is formed.

Next, the control unit 50 checks whether or not the manufacturing of the target manufactured object 38 is completed (step S11). When it is determined that the manufacturing of the manufactured object 38 is not completed, the control unit 50 returns to step S6 described above. As a result, the control unit 50 repeats the processes of steps S6 to S10 for each of the third and subsequent layers. When it is determined that the manufacturing of the manufactured object 38 is completed, the series of processes is ended.

By the three-dimensional powder bed fusion additive manufacturing (PBF-AM) process described above, the target manufactured object 38 is obtained.

### <Configuration of Three-Dimensional PBF-AM System >

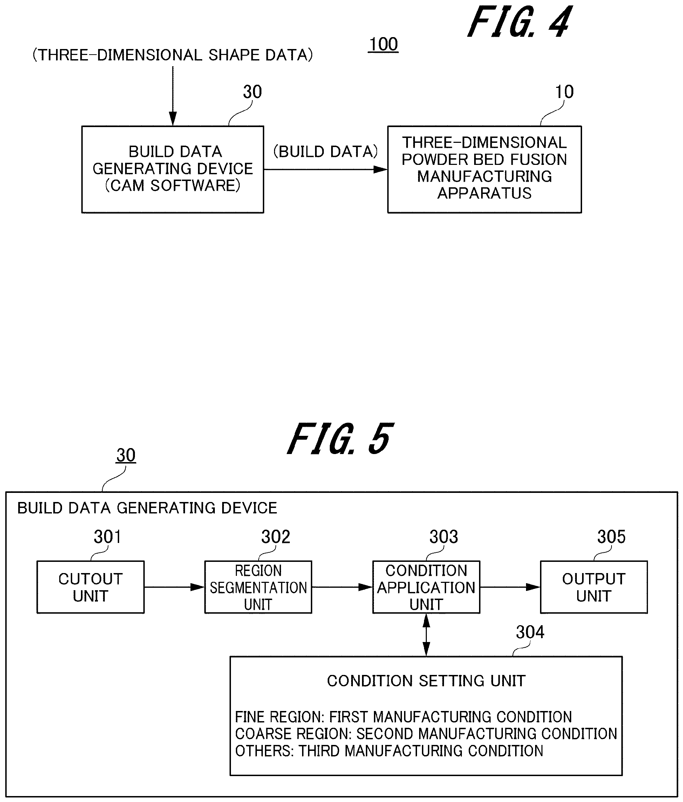

FIG. 4 is a diagram illustrating a configuration example of a three-dimensional PBF-AM system according to an embodiment of the present invention.

As illustrated in FIG. 4, the three-dimensional PBF-AM system 100 includes the three-dimensional PBF-AM apparatus 10 and the build data generating device 30. The configuration and operation of the three-dimensional PBF-AM apparatus 10 are as described above. The build data generating device 30 generates build data using three-dimensional shape data of an article generated by three-dimensional CAD or the like. The build data generated by the build data generating device 30 is recorded, for example, in a portable recording medium, and the build data is provided to the three-dimensional PBF-AM apparatus 10 using this recording medium. The provided build data is read by the control unit 50 of the three-dimensional PBF-AM apparatus 10. The control unit 50 controls the operation of the three-dimensional PBF-AM apparatus 10 based on the build data read from the recording medium. Thus, the three-dimensional PBF-AM apparatus 10 manufactures the article according to the build data generated by the build data generating device 30.

The method of providing the build data from the build data generating device 30 to the three-dimensional PBF-AM apparatus 10 is not limited to the above-described method using the portable recording medium. For example, the build data generated by the build data generating device 30 may be provided to the three-dimensional PBF-AM apparatus 10 via a cable or a network. Furthermore, the three-dimensional PBF-AM apparatus 10 may have a configuration having each function (see FIG. 5) of the build data generating device 30.

The build data generated by the build data generating device 30 includes build data for controlling the operation of the beam irradiation device 14, build data for controlling the powder application device 16, build data for controlling the plate moving device 26, and the like. However, in the present specification, the generation of build data for controlling the operation of the beam irradiation device 14 will be described, and the description regarding the generation of other build data will be omitted.

### <Configuration of build data Generating Device>

FIG. 5 is a block diagram illustrating a configuration example of a build data generating device according to an embodiment of the present invention.

As illustrated in FIG. 5, the build data generating device 30 includes a cutout unit 301, a region segmentation unit 302, a condition application unit 303, a condition setting unit 304, and an output unit 305. Although not illustrated, the build data generating device 30 is configured by a computer including a processor such as a CPU and a storage unit such as a ROM, a RAM, an HDD, and an SSD. Each function of the build data generating device 30 is implemented by the processor reading a program written in advance in the ROM into the RAM and executing the program.

The cutout unit 301 cuts out the cross-sectional shape of each layer from the three-dimensional shape data input to the build data generating device 30. This cross-sectional shape is a two-dimensional cross-sectional shape representing a shape of a region to be melted by irradiation with a beam (the electron beam 15 in the present embodiment), that is, a melting target region in each powder layer 32a. The cross-sectional shape cut out by the cutout unit 301 is a shape represented by a set including one or more outer contour lines and 0 or more inner contour lines.

The region segmentation unit 302 performs processing for segmenting the cross-sectional shape cut out by the cutout unit 301 into a fine region and a coarse region (hereinafter, also referred to as "region segmentation processing"). When there is one cross-sectional shape cut out by the cutout unit 301 corresponding to one powder layer 32a, the region segmentation unit 302 performs processing of segmenting the one cross-sectional shape into a fine region and a coarse region. In addition, when there are a plurality of cross-sectional shapes cut out by the cutout unit 301 corresponding to one powder layer 32a, the region segmentation unit 302 performs processing of segmenting each of the plurality of cross-sectional shapes into a fine region and a coarse region. That is, the region segmentation processing by the region segmentation unit 302 is performed for each cross-sectional shape. Details of the region segmentation processing will be described later.

The condition application unit 303 generates build data by applying different manufacturing conditions to the fine region and the coarse region segmented by the region segmentation unit 302. This build data corresponds to build data (operation sequence program) for the control unit 50 to control the operation of the beam irradiation device 14 in the sintering steps S5 and S10 (FIG. 3).

The manufacturing condition includes a beam scanning condition and a beam irradiation condition. The beam scanning condition is a condition applied when the surface of the powder layer 32a is scanned with the electron beam 15. The beam irradiation condition is a condition applied when the surface of the powder layer 32a is irradiated with the electron beam 15.

There are various beam scanning conditions, and there are also various beam irradiation conditions. Hereinafter, a specific example of the beam scanning conditions and a specific example of the beam irradiation conditions will be described.

The beam scanning conditions include a beam scanning method, a distance between adjacent scanning lines (interval between scanning lines), a scanning speed, and the like. In addition, the beam scanning method includes raster scanning, annual ring-shaped vector scanning, random scanning, and the like. The raster scanning is a method of generating parallel scanning lines and scanning a beam along the generated scanning lines. The raster scanning includes unidirectional raster scanning and alternating direction raster scanning. The annual ring-shaped vector scanning is a method in which scanning lines are generated inward by a certain distance from a contour line forming a cross-sectional shape, and a beam is scanned along the generated scanning lines. The vector scanning includes a scanning method other than the annual ring-shaped vector scanning. The random scanning is a method of randomly beam scanning a region having a cross-sectional shape. When the surface of the powder layer 32a is scanned by the electron beam 15, the center of the spot of the electron beam 15 moves on the scanning line.

Meanwhile, the beam irradiation conditions include the current amount of the charged particle beam, the beam size in the manufactured surface, and the like. The current amount of the charged particle beam corresponds to the beam current amount. In the present embodiment, the electron beam 15 is used as the charged particle beam. Therefore, the current amount of the electron beam 15 corresponds to the current amount of the charged particle beam. The size (spot size) of the electron beam 15 on the manufactured surface 32b corresponds to the beam size on the manufactured surface. When the beam with which the surface of the powder layer 32a is irradiated is a laser beam, the beam irradiation conditions include the laser intensity, the beam size on the manufactured surface, and the like. The laser intensity corresponds to the intensity of the laser beam, that is, the beam intensity.

The condition application unit 303 refers to the condition setting unit 304 when applying different manufacturing conditions to the fine region and the coarse region segmented by the region segmentation unit 302. In the condition setting unit 304, manufacturing conditions to be applied to the fine region, manufacturing conditions to be applied to the coarse region, and the like are set in advance. Details will be described below.

The condition setting unit 304 is a portion that sets in advance a first manufacturing condition to be applied to the fine region, a second manufacturing condition to be applied to the coarse region, a third manufacturing condition to be applied to the other portion, and the like in accordance with the designation of the user. For example, prior to the powder bed fusion additive manufacturing using the three-dimensional PBF-AM apparatus 10, the user inputs information necessary for setting the manufacturing condition to the condition setting unit 304 by, for example, a key operation, a mouse operation, or the like while viewing a screen for manufacturing condition setting. Thus, the condition setting unit 304 sets the first manufacturing condition (beam scanning condition and beam irradiation condition) to be applied to the fine region and the second manufacturing condition (beam scanning condition and beam irradiation condition) to be applied to the coarse region according to the information input (designated) by the user. Furthermore, the user sets the third manufacturing conditions (beam scanning conditions and beam irradiation conditions) to be applied to other portions as necessary.

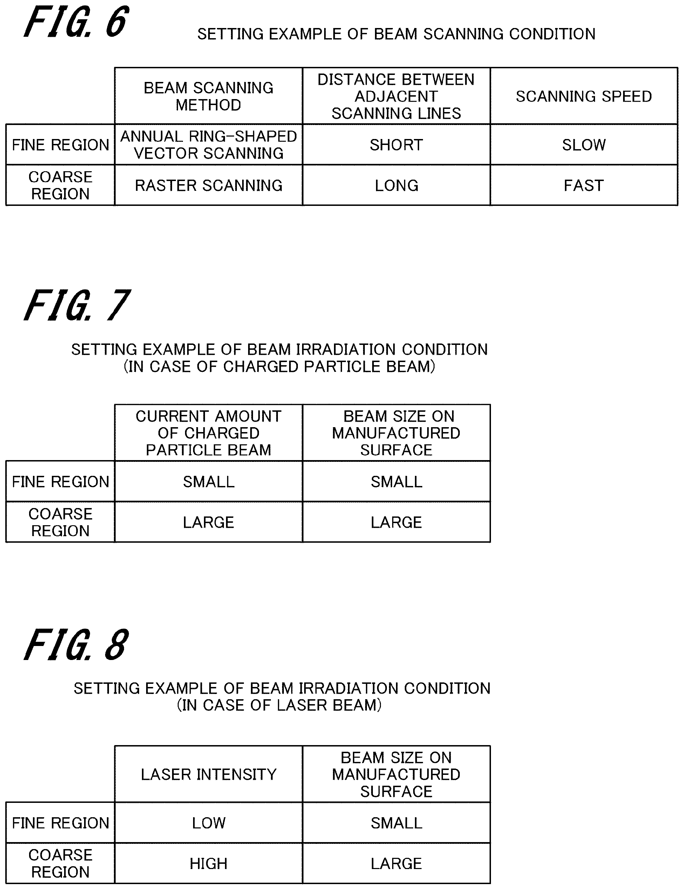

FIG. 6 is a diagram illustrating a setting example of a beam scanning condition.

As illustrated in FIG. 6, different beam scanning conditions are set for the fine region and the coarse region. Specifically, regarding the fine region, the beam scanning method is set to "annual ring-shaped vector scanning", the distance between adjacent scanning lines is set to "short", and the scanning speed is set to "slow". For the coarse region, the beam scanning method is set to "raster scanning", the distance between the adjacent scanning lines is set to "long", and the scanning speed is set to "fast". In other words, a beam scanning condition prioritizing shape reproducibility of manufacturing is set for the fine region, and a beam scanning condition prioritizing high speed (throughput) of manufacturing is set for the coarse region.

In FIG. 6, for convenience of description, the distance between the adjacent scanning lines is indicated in two stages of "short" and "long", but the distance may be set by the user selecting a desired distance from three or more stages, or may be set by the user inputting a numerical value. The same applies to the scanning speed.

FIG. 7 is a diagram illustrating a setting example of a beam irradiation condition in the case of a charged particle beam.

As illustrated in FIG. 7, different beam irradiation conditions are set for the fine region and the coarse region. Specifically, regarding the fine region, the current amount of the charged particle beam (electron beam 15) is set to "small", and the beam size in the manufactured surface is set to "small". For the coarse region, the current amount of the charged particle beam is set to "large", and the beam size in the manufactured surface is set to "large". In other words, a beam irradiation condition prioritizing shape reproducibility of manufacturing is set for the fine region, and a beam irradiation condition prioritizing high speed of manufacturing is set for the coarse region.

In FIG. 7 for convenience of description, the current amount of the charged particle beam is illustrated in two stages of "small" and "large", but the current amount may be set by the user selecting a desired beam current amount from three or more stages, or may be set by the user inputting a numerical value. The same applies to the beam size in the manufactured surface.

FIG. 8 is a diagram illustrating a setting example of a beam irradiation condition in the case of a laser beam.

As illustrated in FIG. 8, different beam irradiation conditions are set for the fine region and the coarse region. Specifically, regarding the fine region, the intensity (beam intensity) of the laser beam is set to "low", and the beam size in the manufactured surface is set to "small". For the coarse region, the intensity of the laser beam is set to "high", and the beam size in the manufactured surface is set to "large". In other words, a beam irradiation condition prioritizing shape reproducibility of manufacturing is set for the fine region, and a beam irradiation condition prioritizing high speed of manufacturing is set for the coarse region.

In FIG. 8, for convenience of description, the intensity of the laser beam is shown in two stages of "low" and "high", but the laser intensity may be set by the user selecting a desired intensity of the laser beam from three or more stages, or may be set by the user inputting a numerical value.

The same applies to the beam size in the manufactured surface.

The output unit 305 outputs the build data generated by the condition application unit 303 to the electronic file. The build data output to the electronic file is provided to the three-dimensional PBF-AM apparatus 10 by the above-described method (for example, a method using a portable recording medium). Furthermore, in a case where the article to be manufactured is, for example, manufactured by powder bed fusion additive manufacturing in 100 layers, build data for 100 layers is provided to the three-dimensional PBF-AM apparatus 10. Then, the control unit 50 of the three-dimensional PBF-AM apparatus 10 sequentially controls the operation of the entire three-dimensional PBF-AM apparatus 10 according to the build data provided from the build data generating device 30.

### <Processing Procedure of build data Generating Device>

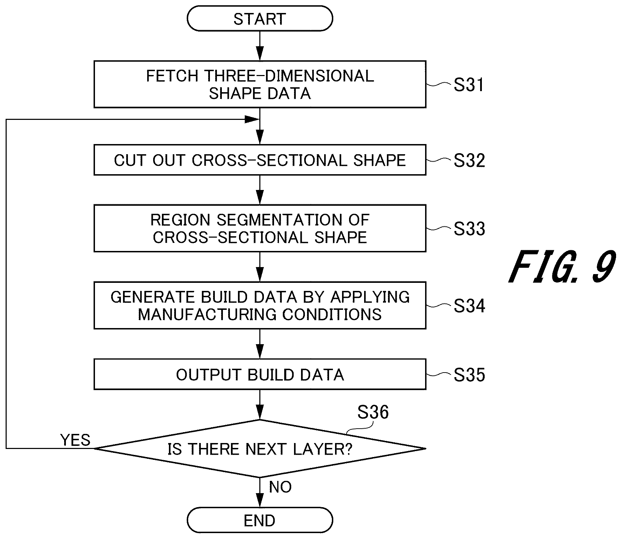

FIG. 9 is a flowchart illustrating an example of a processing procedure of the build data generating device (build data generation method).

First, the build data generating device 30 fetches three-dimensional shape data (step S31).

The fetching of the three-dimensional shape data may be performed by the cutout unit 301, or may be performed by a capturing unit (not illustrated) provided in a preceding stage of the cutout unit 301.

Next, the cutout unit 301 cuts out a cross-sectional shape of one layer from the three-dimensional shape data (step S32). The one layer includes one or a plurality of cross-sectional shapes.

Next, the region segmentation unit 302 segments the cross-sectional shape cut out by the cutout unit 301 into a fine region and a coarse region (step S33).

Next, the condition application unit 303 generates build data by applying different manufacturing conditions to the fine region and the coarse region segmented by the region segmentation unit 302 (step S34). When generating the build data, the condition application unit 303 refers to the condition setting unit 304 to determine which manufacturing condition is to be applied to each region (fine region, coarse region) of the cross-sectional shape.

Next, the output unit 305 outputs the build data generated by the condition application unit 303 in step S34 to the electronic file (step S35).

Next, the build data generating device 30 determines whether there is a next layer (step S36).

This determination is performed, for example, by the cutout unit 301. Then, in a case where there is the next layer (in a case of Yes in step S36), the process returns to step S32 described above, and in a case where there is no next layer (in a case of No in step S36), the series of processes is ended.

### <Region Segmentation Processing>

Next, region segmentation processing performed by the region segmentation unit 302 will be described in detail.

The region segmentation processing includes processing of specifying a fine region (hereinafter, referred to as "fine region specifying processing") and processing of specifying a coarse region (hereinafter, it is referred to as "coarse region specifying processing"). The region segmentation unit 302 segments the cross-sectional shape of each layer cut out by the cutout unit 301 into a fine region and a coarse region by morphological graphic processing. In a case where the cross-sectional shape of each layer is segmented into one or a plurality of fine regions and one or a plurality of coarse regions, each of the fine regions is a region mainly surrounded by an original contour line of a region where the translated contour lines intersect each other and the region disappears when the entire contour line of the cross-sectional shape of the same layer is parallel to the inside of a certain distance, and each of the coarse regions is a region mainly surrounded by an original contour line of a region where the translated contour lines do not intersect each other and the region does not disappear when the entire contour line of the cross-sectional shape of the same layer is parallel to the inside of the certain distance.

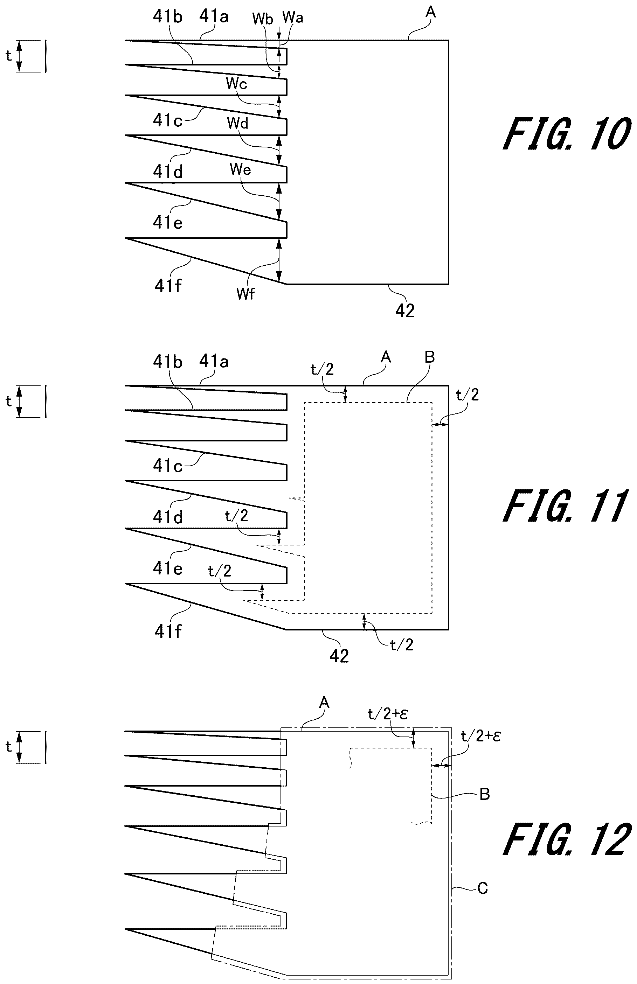

In the present embodiment, the cross-sectional shape cut out by the cutout unit 301 is represented by, for example, a figure A illustrated in FIG. 10. The figure A is a figure representing a two-dimensional cross-sectional shape. The figure A has serrated (comb-shaped) shape portions 41a, 41b, 41c, 41d, 41e, and 41f and other shape portions 42. The figure A corresponds to a specific example of a cross-sectional shape in which shape elements in which appropriate manufacturing conditions are contradictory are mixed. The two-dimensional cross-sectional shape of the figure A is a shape expressed by polygonal vector data. However, the cross-sectional shape to be subjected to the region segmentation may be a shape expressed by a curve or a shape expressed by bitmap data. That is, the expression form of the cross-sectional shape is not limited.

In segmenting the cross-sectional shape including the figure A into regions, the region segmentation unit 302 uses a threshold value t for determining (specifying) a fine region and any value ε that satisfies a predetermined condition described later.

The threshold value t is a value determined in advance by the user, and the unit is mm. FIG. 10 schematically illustrates the size (dimension) of the threshold value t by the length of a straight line. The same applies to other drawings. The threshold value t is preferably 1.0 mm or more, more preferably 2.0 mm or more, and still more preferably 2.5 mm or more. In addition, the threshold value t is preferably 5.0 mm or less, more preferably 4.0 mm or less, and still more preferably 3.5 mm or less.

In addition, in order to prioritize shape reproducibility of manufacturing, the threshold value t is preferably 5 times or more, more preferably 10 times or more, and still more preferably 15 times or more the beam size when the device makes the beam size the smallest.

Furthermore, in order to prioritize the high speed (throughput) of the manufacturing speed, the threshold value t is preferably three times or less, more preferably two times or less, and still more preferably one time or less the beam size when the device makes the beam size the largest.

For example, when the beam size is 0.2 mm in a case where the device has the smallest beam size, the threshold value t is preferably 1.0 mm or more, more preferably 2.0 mm or more, and still more preferably 3.0 mm or more.

For example, when the beam size is 2.0 mm in a case where the device has the largest beam size, the threshold value t is preferably 6.0 mm or less, more preferably 4.0 mm or less, and still more preferably 2.0 mm or less.

The any value ε is a value larger than the calculation rounding error assumed to occur in the computer and smaller than the manufacturing dimension reproduction accuracy of the three-dimensional PBF-AM apparatus 10. The value ε is a value determined on the CAM software program, and the unit is um.

### (Fine Region Specifying Processing)

First, the region segmentation unit 302 performs a process of specifying a fine region from the figure A by the following procedure.

As illustrated in FIG. 11, the region segmentation unit 302 generates a figure B (a figure indicated by a broken line in FIG. 11) by reducing the figure A by a dimension of t/2. At this time, the maximum values of the widths Wa, Wb, and Wc between the contour lines in the shape portions 41a, 41b, and 41c of the figure A illustrated in FIG. 10 are all less than the threshold value t. Therefore, the shape portions 41a, 41b, and 41c disappear when being reduced by the dimension of t/2. On the other hand, the maximum values of the widths Wd, We, and Wf between the contour lines in the shape portions 41d, 41e, and 41f are all equal to or larger than the threshold value t. Therefore, the shape portions 41d, 41e, and 41f do not disappear even when reduced by the dimension of t/2, and are reflected in a part of the figure B. In addition, since the width between the contour lines of the shape portion 42 is sufficiently larger than the threshold value t, the shape portion 42 is reflected in the figure B having a size smaller by a dimension of t/2.

Next, as illustrated in FIG. 12, the region segmentation unit 302 generates a figure C (a figure indicated by an alternate long and short dash line in FIG. 12) by enlarging the figure B by a dimension of (t/2 + ε). At this time, when the acute angle portion of the figure B is enlarged with a dimension of (t/2 + ε), the vertex of the acute angle portion moves in the left direction of FIG. 12, and a spike shape occurs. The region segmentation unit 302 limits the vertex moving distance of the acute angle portion in order to prevent the occurrence of the spike shape. As a specific example, the region segmentation unit 302 provides an upper limit value for the moving distance of the vertex in advance, and performs processing of cutting off an acute angle portion where the moving distance of the vertex exceeds the upper limit value by the enlargement processing. As a result, the region segmentation unit 302 can generate the figure C without the spike shape from the figure B including the acute angle portion. The upper limit may be determined in advance on the CAM software program.

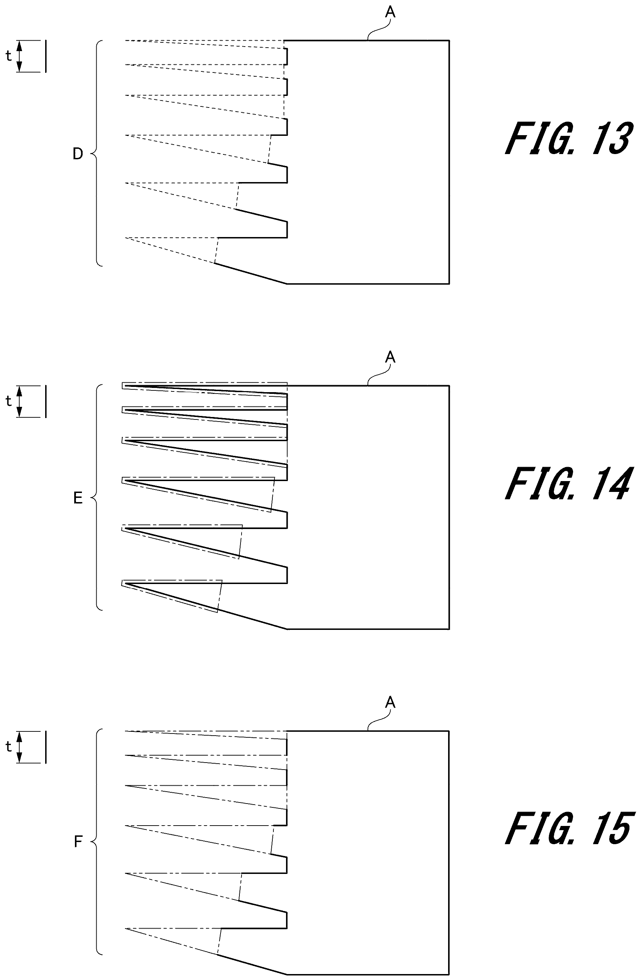

Next, as illustrated in FIG. 13, the region segmentation unit 302 generates a figure D (a figure indicated by a broken line in FIG. 13) by removing a figure portion included in the range of the figure C from the figure A.

The figure D corresponds to a part of the serrated shape portions 41a, 41b, 41c, 41d, 41e, and 41f (see FIG. 10) described above.

Next, as illustrated in FIG. 14, the region segmentation unit 302 generates a figure E (a figure indicated by an alternate long and short dash line in FIG. 14) by enlarging the figure D by a dimension of ε. The figure E is a figure having a size larger than the figure D.

Next, as illustrated in FIG. 15, the region segmentation unit 302 generates a figure F (a figure indicated by a two-dot chain line in FIG. 15) by extracting a figure portion included in the range of the figure E from the figure A. Then, the region segmentation unit 302 specifies the region of the figure F as a fine region.

In the above-described fine region specifying processing, the figure A corresponds to a first figure, and the figure Bcorresponds to a second figure. In addition, the figure C corresponds to a third figure, and the figure D corresponds to a fourth figure. In addition, the figure E corresponds to a fifth figure, and the figure F corresponds to a sixth figure.

### (Coarse Region Specifying Processing)

Subsequently, the region segmentation unit 302 performs a process of specifying a coarse region from the figure A by the following procedure.

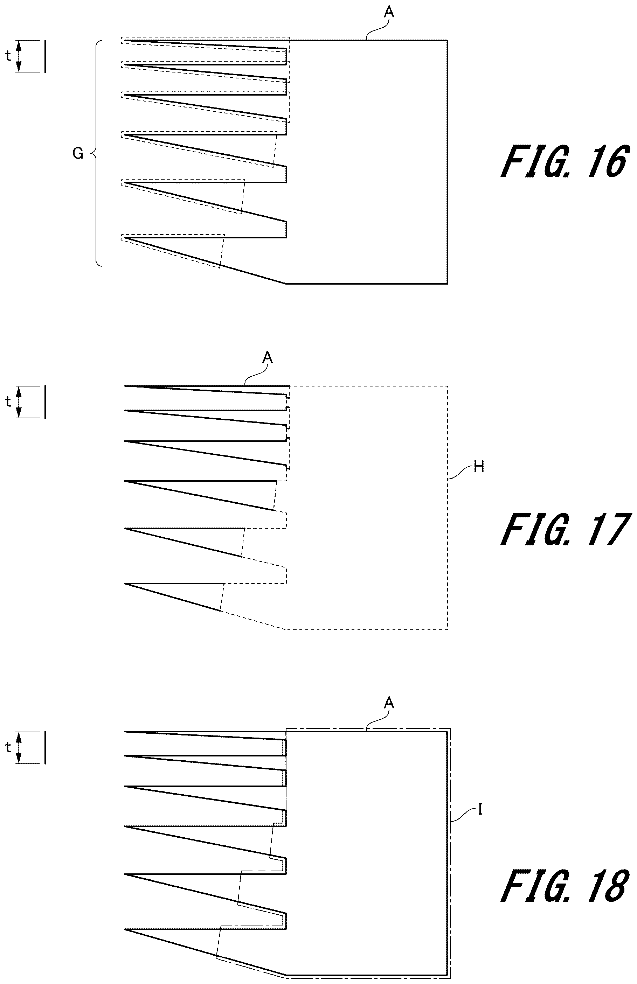

First, as illustrated in FIG. 16, the region segmentation unit 302 generates a figure G (a figure indicated by a broken line in FIG. 16) by enlarging the figure F by the dimension of ε. The figure G is a figure having a size larger than the figure F.

Next, as illustrated in FIG. 17, the region segmentation unit 302 generates a figure H (a figure indicated by a broken line in FIG. 17) by removing a figure portion included in the range of the figure G from the figure A.

Next, as illustrated in FIG. 18, the region segmentation unit 302 generates a figure I (a figure indicated by an alternate long and short dash line in FIG. 18) by enlarging the figure H by a dimension of ε.

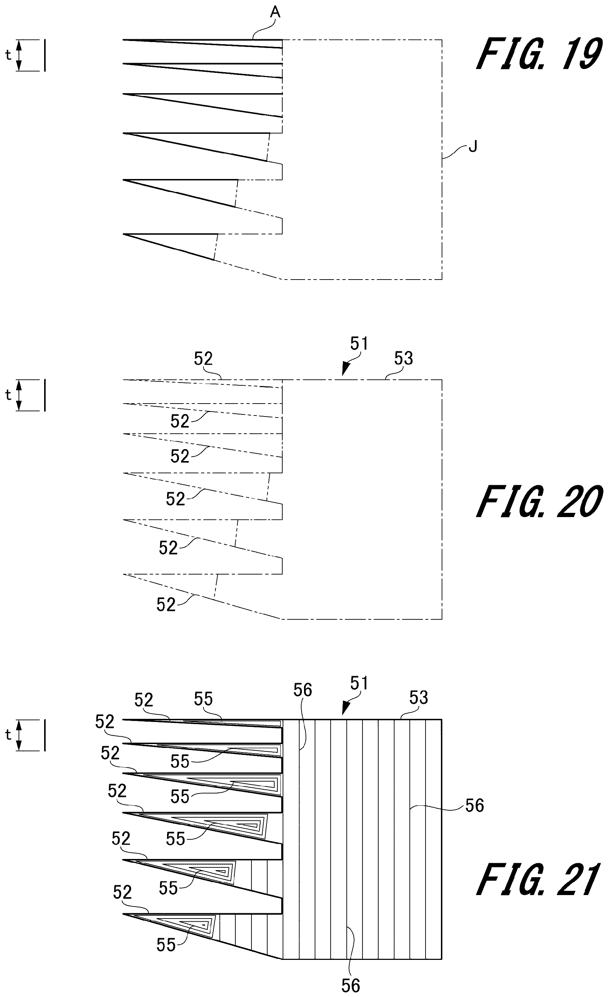

Next, as illustrated in FIG. 19, the region segmentation unit 302 generates a figure J (a figure indicated by a two-dot chain line in FIG. 19) by extracting a figure portion included in the range of the figure I from the figure A. Then, the region segmentation unit 302 specifies the region of the figure J as a coarse region.

As illustrated in FIG. 20, the region segmentation unit 302 segments one cross-sectional shape 51 into a fine region 52 (a region indicated by a two-dot chain line in FIG. 20) and a coarse region 53 (a region indicated by an alternate long and short dash line in FIG. 20) by the region segmentation processing including the fine region specifying processing and the coarse region specifying processing described above.

Meanwhile, the condition application unit 303 applies the first manufacturing condition to the fine region 52 and applies the second manufacturing condition to the coarse region 53 among the fine region 52 and the coarse region 53 segmented by the region segmentation unit 302. As a result, for example, in the case of the setting examples illustrated in FIGS. 6 and 7, the condition application unit 303 applies "annual ring-shaped vector scanning" to the fine region 52 and applies "raster scanning" to the coarse region 53. The same applies to the manufacturing conditions other than the beam scanning method.

Furthermore, when generating the build data by applying different manufacturing conditions to the fine region 52 and the coarse region 53, the condition application unit 303 performs processing (hereinafter, also referred to as "combining processing") of combining the scanning lines generated for scanning each region (52 and 53) with the electron beam 15 into one. In other words, the combining processing is processing of combining a scanning line for beam scanning the fine region 52 and a scanning line for beam scanning the coarse region 53. As the combining processing performed by the condition application unit 303, for example, two combining processing (first combining processing and second combining processing) can be considered.

### (First Combining Processing)

FIG. 21 is a diagram illustrating an example of a scanning line generated by first combining processing.

First, the condition application unit 303 generates scanning lines by applying different manufacturing conditions to the fine region 52 and the coarse region 53 segmented by the region segmentation unit 302. In other words, the condition application unit 303 regards the fine region 52 and the coarse region 53 as cross-sectional shapes of independent articles, and generates a scanning line for each region. As a result, in the fine region 52, a scanning line for annual ring-shaped vector scanning is generated, and in the coarse region 53, a scanning line for raster scanning is generated.

Next, as illustrated in FIG. 21, the condition application unit 303 combines the scanning line 55 for annual ring-shaped vector scanning generated in the fine region 52 and the scanning line 56 for raster scanning generated in the coarse region 53 as a scanning line for scanning one cross-sectional shape 51 with the electron beam 15. In other words, the condition application unit 303 combines the scanning lines 55 and 56 having different beam scanning methods as scanning lines for beam scanning one cross-sectional shape 51.

By performing the first combining processing described above, even when one cross-sectional shape 51 is segmented into the fine region 52 and the coarse region 53, the condition application unit 303 can generate one build data for each cross-sectional shape 51.

### (Second Combining Processing)

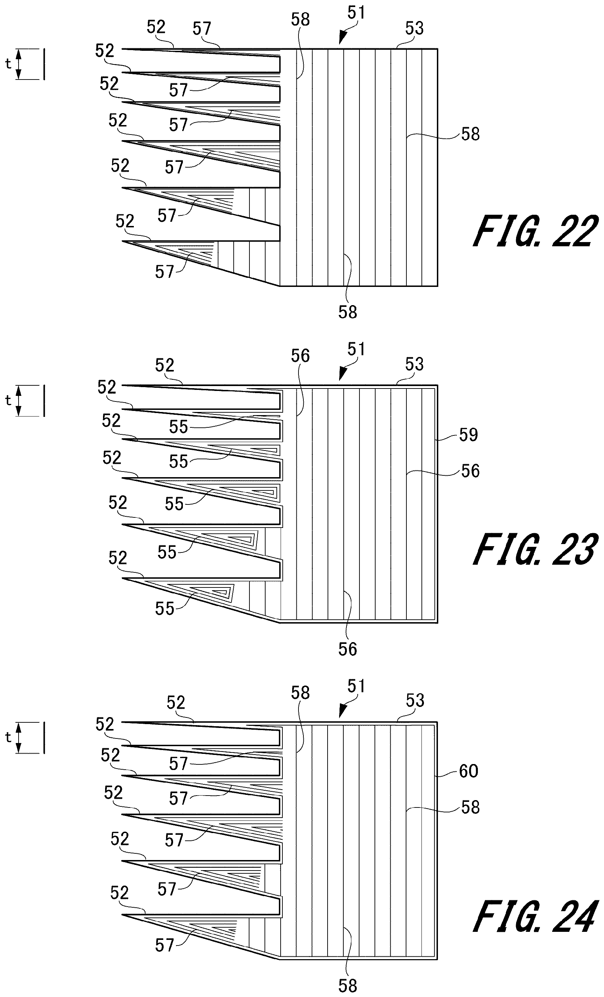

FIG. 22 is a diagram illustrating an example of a scanning line generated by second combining processing.

First, the condition application unit 303 generates the scanning line under the first manufacturing condition to be applied to the fine region 52 and generates the scanning line under the second manufacturing condition to be applied to the coarse region 53 for the original cross-sectional shape that was the region segmentation target. As a result, a scanning line obtained by applying annual ring-shaped vector scanning to the cross-sectional shape formed of the figure A (see FIG. 10) and a scanning line obtained by applying raster scanning to the cross-sectional shape formed of the figure A are generated.

Next, the condition application unit 303 extracts scanning lines from each of the fine region 52 and the coarse region 53 obtained by segmenting the cross-sectional shape including the figure A into regions as described above. At this time, the scanning line extracted from the fine region 52 is a scanning line to which annual ring-shaped vector scanning, which is one of the first manufacturing conditions, is applied, and the scanning line extracted from the coarse region 53 is a scanning line to which raster scanning, which is one of the second manufacturing conditions, is applied.

Next, as illustrated in FIG. 22, the condition application unit 303 combines the scanning line 57 extracted from the fine region 52 and the scanning line 58 extracted from the coarse region 53 as a scanning line for scanning one cross-sectional shape 51 with the electron beam 15. In other words, the condition application unit 303 combines the scanning lines 57 and 58 having different beam scanning methods as scanning lines for beam scanning one cross-sectional shape 51.

By performing the second combining processing described above, even when one cross-sectional shape 51 is segmented into the fine region 52 and the coarse region 53, the condition application unit 303 can generate one build data for each cross-sectional shape 51.

Furthermore, the condition application unit 303 may generate a scanning line for beam scanning the vicinity of the contour line of the cross-sectional shape 51 by applying the manufacturing condition dedicated to the contour line. The manufacturing condition dedicated to the contour line is different from the first manufacturing condition applied to the fine region and the second manufacturing condition applied to the coarse region.

For example, the manufacturing condition dedicated to the contour line is different from the first manufacturing condition and the second manufacturing condition in at least one of the scanning speed, the current amount of the electron beam 15, and the beam size in the manufactured surface. The condition application unit 303 generates a scanning line to which the manufacturing condition dedicated to the contour line is applied along the contour line of the cross-sectional shape 51. As a result, the portion of the contour line of the cross-sectional shape 51 is scanned by the electron beam 15 like a so-called single stroke based on the manufacturing condition dedicated to the contour line.

FIG. 23 is a diagram illustrating a first example of generating a scanning line in the vicinity of the contour line of the cross-sectional shape.

In FIG. 23, one scanning line 59 is generated in the vicinity of the contour line of the cross-sectional shape 51 along the contour line. On the inner side of the scanning line 59, the scanning line 55 for annual ring-shaped vector scanning and the scanning line 56 for raster scanning are generated. The scanning lines 55 and 56 are scanning lines generated by the first combining processing described above.

FIG. 24 is a diagram illustrating a second example of generating a scanning line in the vicinity of the contour line of the cross-sectional shape.

In FIG. 24, one scanning line 60 is generated in the vicinity of the contour line of the cross-sectional shape 51 along the contour line. On the inner side of the scanning line 60, the scanning line 57 for annual ring-shaped vector scanning and the scanning line 58 for raster scanning are generated. The scanning lines 57 and 58 are scanning lines generated by the second combining processing described above.

As described above, by generating the scanning line 59 or the scanning line 60 for beam scanning the vicinity of the contour line of the cross-sectional shape 51 under the manufacturing condition dedicated to the contour line, when the portion of the actual cross-sectional shape 51 is melted by the irradiation with the electron beam 15, the step generated in the portion of the contour line of the cross-sectional shape 51 can be reduced to be small or the step can be eliminated. Therefore, the surface of the article obtained by manufacturing can be smoothly finished.

As described above, in the embodiment of the present invention, the cross-sectional shape cut out from the three-dimensional shape data of the article is segmented into the fine region and the coarse region, and the article is manufactured by applying different manufacturing conditions to the fine region and the coarse region. As a result, it is possible to manufacture the entire cross-sectional shape under an appropriate manufacturing condition even when shape elements having opposing appropriate manufacturing conditions are mixed in one cross-sectional shape. As a result, it is possible to manufacture an article while achieving both shape reproducibility and high speed.

In the above embodiment, the region segmentation unit 302 specifies the fine region 52 using one threshold value t for determining the fine region, but the present invention is not limited thereto, and a plurality of fine regions having different degrees of fineness may be specified using a plurality of threshold values for determining the fine region.

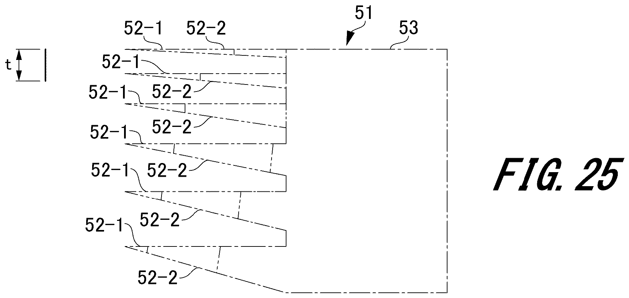

For example, in a case where the region segmentation processing is performed using the two threshold values t1 and t2 (however, a relationship of 0 < t1 < t2 is satisfied.), the region segmentation unit 302 first performs the fine region specifying processing similar to the above described fine region specifying processing using the threshold value t1 to specify a first fine region. Next, the region segmentation unit 302 performs the same fine region specifying processing as described above using the threshold value t2 on a portion other than the figure specified as the first fine region, thereby specifying a second fine region. As a result, as illustrated in FIG. 25, one cross-sectional shape 51 can be segmented into the first fine region 52-1, the second fine region 52-2, and the coarse region 53. Furthermore, the condition application unit 303 can generate the build data by applying different manufacturing conditions to the first fine region 52-1 and the second fine region 52-2. Therefore, the fine regions 52-1 and 52-2 having different degrees of fineness can be manufactured under more appropriate manufacturing conditions.

Furthermore, in the above-described embodiment, an example has been described in which the region segmentation unit 302 performs the region segmentation processing on the two-dimensional cross-sectional shape cut out by the cutout unit 301 from the three-dimensional shape data of the article, but the present invention is not limited thereto, and the region segmentation processing by the region segmentation unit 302 may be performed on a three-dimensional figure representing the three-dimensional shape of the article. That is, the order of the processing performed by the cutout unit 301 and the processing performed by the region segmentation unit 302 may be changed. In this case, the region segmentation unit 302 performs processing for segmenting the three-dimensional shape of the article into a fine region and a coarse region (region segmentation processing) using the three-dimensional shape data before being cut out by the cutout unit 301. Further, the cutout unit 301 cuts out the cross-sectional shape of each layer from the three-dimensional shape data subjected to the region segmentation processing by the region segmentation unit 302. Therefore, at the time of cutting out from the three-dimensional shape data, the cross-sectional shape is segmented into a fine region and a coarse region. Even in this case, the same effects as those of the above embodiment can be obtained.

Also, when an article is manufactured by the three-dimensional PBF-AM apparatus 10, the article to be the manufactured object 38 includes an upward-facing portion, a downward-facing portion, an intermediate surface portion, and a contour portion. The upward-facing portion of the article is the portion disposed upwardly in FIG. 1, which is also referred to as an upskin. The downward-facing portion of the article is the portion disposed downwardly in FIG. 1, which is also referred to as a downskin. For example, in a case where the article has a three-dimensional shape such as a cup, a straw portion of the cup and a bottom portion of the cup that receives the liquid are each an upward-facing portion, and a lowermost portion of the cup is a downward-facing portion. The intermediate surface portion and the contour portion are portions that do not belong to either the upward-facing portion or the downward-facing portion. Priority is given to finishing the upward-facing portion and the downward-facing portion of the article so that the appearance is beautiful (smooth), and priority is given to finishing the intermediate surface portion of the article quickly.

Therefore, when manufacturing the article, the condition application unit 303 may change the manufacturing condition applied to the fine region in each portion of the upward-facing portion, the downward-facing portion, the intermediate surface portion, and the contour portion of the article. Similarly, the condition application unit 303 may change the manufacturing condition applied to the coarse region in each portion of the upward-facing portion, the downward-facing portion, the intermediate surface portion, and the contour portion of the article. For example, taking the manufacturing condition applied to the fine region as an example, in the condition setting unit 304, four manufacturing conditions to be applied to the fine region are set corresponding to each portion of the upward-facing portion, the downward-facing portion, the intermediate surface portion, and the contour portion of the article. Then, the condition application unit 303 changes the manufacturing condition to be applied to the fine region depending on which portion of the upward-facing portion, the downward-facing portion, the intermediate surface portion, and the contour portion of the article the fine region segmented by the region segmentation unit 302 corresponds to. The same applies to the manufacturing condition applied to the coarse region. Thus, the article can be manufactured under more appropriate conditions.

### <Modifications and the like >

The technical scope of the present invention is not limited to the above-described embodiment, and includes a mode in which various modifications and improvements are added within a range in which specific effects obtained by the constituent elements of the invention and the combination thereof can be derived.

For example, in the above embodiment, the manufacturing condition includes the beam scanning condition and the beam irradiation condition, but the present invention is not limited thereto, and the manufacturing condition may include at least one of the beam scanning condition and the beam irradiation condition.

In the above embodiment, the beam scanning conditions include the beam scanning method, the distance between the adjacent scanning lines, and the scanning speed, but the present invention is not limited thereto, and the beam scanning conditions may include at least one of the beam scanning method, the distance between the adjacent scanning lines, and the scanning speed.

Further, in the above embodiment, the beam irradiation condition includes the beam current amount, the beam intensity, and the beam size in the manufactured surface, but the present invention is not limited thereto, and the beam irradiation condition may include at least one of the beam current amount, the beam intensity, and the beam size in the manufactured surface.

The first manufacturing condition applied to the fine region 52 and the second manufacturing condition applied to the coarse region 53 may be different from each other in at least one of each requirement of the above-described beam scanning conditions and each condition of the above-described beam irradiation conditions. As an example, the first manufacturing condition applied to the fine region 52 and the second manufacturing condition applied to the coarse region 53 may be different only in the beam scanning method, or may be different only in the beam current amount.

In the above embodiment, the region segmentation unit 302 specifies the coarse region by the graphic processing illustrated in FIGS. 16 to 19, but the present invention is not limited thereto, and after specifying the fine region by the graphic processing illustrated in FIGS. 11 to 15, a region other than the specified fine region may be specified as the coarse region.

In the above embodiment, the example has been described in which the cross-sectional shape is segmented into the fine region and the coarse region using the threshold value t for determining the fine region and the value ε satisfying the predetermined condition, but the present invention is not limited thereto. For example, among contour lines forming a cross-sectional shape, a figure portion in which a distance (width) between adjacent contour lines is less than the threshold value t may be specified as a fine region, and a figure portion exceeding the threshold value t may be specified as a coarse region. That is, the region segmentation unit 302 may perform the region segmentation using only the threshold value t. In addition, the region segmentation processing performed by the region segmentation unit 302 is not limited to a specific process, and various processes can be adopted.

In addition, the region segmentation unit 302 may segment the cross-sectional shape into a fine region and a coarse region based on manual operation by the user. However, in order to reduce the burden on the user for preparing the build data, it is preferable that the region segmentation unit 302 automatically segments the region as in the above embodiment.

### Reference Signs List

10 three-dimensional powder bed fusion additive manufacturing (PBF-AM) apparatus
15 electron beam (charged particle beam)
30 build data generating device
38 manufactured object (article)
51 cross-sectional shape
52 fine region
53 coarse region
55, 56, 57, 58, 59, 60 scanning line
100 three-dimensional powder bed fusion additive manufacturing (PBF-AM) system
302 region segmentation unit
303 condition application unit

## Claims

1. A build data generating device (30) generating build data for controlling a three-dimensional powder bed fusion additive manufacturing apparatus (10) that manufactures an article (38) by melting a cross-sectional shape (51) of each layer by irradiation of a beam, the build data generating device (30) comprising:
a region segmentation unit (302) that performs processing for segmenting the cross-sectional shape (51) cut out from three-dimensional shape data of the article (38) into a fine region (52) and a coarse region (53); and
a condition application unit (303) that applies different manufacturing conditions to the fine region (52) and the coarse region (53) segmented by the region segmentation unit (302) to generate the build data.

2. The build data generating device according to claim 1, wherein
the manufacturing condition includes at least one of a beam scanning condition and a beam irradiation condition.

3. The build data generating device according to claim 2, wherein
the beam scanning condition includes at least one of a beam scanning method, a distance between adjacent scanning lines, and a scanning speed.

4. The build data generating device according to claim 2, wherein
the beam irradiation condition includes at least one of a beam current amount, a beam intensity, and a beam size on a manufactured surface.

5. The build data generating device according to claim 1, wherein
the region segmentation unit (302) uses a threshold value t for determining the fine region (52) and a value ε satisfying a predetermined condition, and
executes: processing of reducing a first figure representing the cross-sectional shape (51) by a dimension of t/2 to generate a second figure;
processing of enlarging the second figure by a dimension of (t/2 + ε) to generate a third figure;
processing of removing a figure portion included in a range of the third figure from the first figure to generate a fourth figure;
processing of enlarging the fourth figure by a dimension of ε to generate a fifth figure; and
processing of extracting a figure portion included in a range of the fifth figure from the first figure to generate a sixth figure, and
specifies a region of the sixth figure as the fine region (52).

6. The build data generating device according to claim 5, wherein
when enlarging the second figure by a dimension of (t/2 + ε),
the region segmentation unit (302) limits a vertex moving distance of an acute angle portion of the second figure.

7. The build data generating device according to claim 1, wherein
the condition application unit (303) generates scanning lines by applying different manufacturing conditions to the fine region (52) and the coarse region (53) segmented by the region segmentation unit (302), and then combines the scanning lines (55) of the fine region (52) and the scanning lines (56) of the coarse region (53) into one to generate the build data.

8. The build data generating device according to claim 1, wherein
the condition application unit (303) generates respective scanning lines for the cross-sectional shape (51) under a manufacturing condition to be applied to the fine region (52) and a manufacturing condition to be applied to the coarse region (53), extracts the scanning line (57) generated under the manufacturing condition to be applied to the fine region (52) from the fine region (52), extracts the scanning line (58) generated under the manufacturing condition to be applied to the coarse region (53) from the coarse region (53), and generates the build data by combining the scanning line (57) extracted from the fine region (52) and the scanning line (58) extracted from the coarse region (53) into one.

9. The build data generating device according to claim 1, wherein
the condition application unit (303) generates scanning lines (59, 60) for beam scanning the vicinity of a contour line of the cross-sectional shape (51) by applying a manufacturing condition different from the manufacturing condition applied to the fine region (52) and the manufacturing condition applied to the coarse region (53).

10. A three-dimensional powder bed fusion additive manufacturing system (100) comprising:
a three-dimensional powder bed fusion additive manufacturing apparatus (10) that manufactures an article (38) by melting a cross-sectional shape (51) of each layer by irradiation of a beam; and
a build data generating device (30) that generates build data for controlling the three-dimensional powder bed fusion additive manufacturing apparatus (10), wherein
the build data generating device (30) includes
a region segmentation unit (302) that performs processing for segmenting the cross-sectional shape (51) cut out from three-dimensional shape data of the article (38) into a fine region (52) and a coarse region (53); and
a condition application unit (303) that applies different manufacturing conditions to the fine region (52) and the coarse region (53) segmented by the region segmentation unit (302) to generate the build data, and
the three-dimensional powder bed fusion additive manufacturing apparatus (10) manufactures the article (38) according to the build data.

11. A three-dimensional powder bed fusion additive manufacturing method for manufacturing an article (38) by melting a cross-sectional shape (51) of each layer by irradiation of a beam, the method comprising:
segmenting the cross-sectional shape (51) cut out from three-dimensional shape data of the article (38) into a fine region (52) and a coarse region (53); and applying different manufacturing conditions to the fine region (52) and the coarse region (53), respectively, to manufacture the article (38).
